# DEMANDE DE BREVET EUROPEEN

(11) **EP 0 712 061 A1**
(43) Date de publication de la demande: **15.05.1996**
(21) Numéro de dépôt: 95117614.8
(22) Date de dépôt: 08.11.1995
(51) Int. Cl.: G05D 9/12, B60S 1/48

(54) **Module de commande d'une pompe de lave-glace pour véhicule automobile**

(30) Priorité: 08.11.1994 FR 9413513
(71) Demandeur: VALEO ELECTRONIQUE, F-94042 Creteil Cédex (FR)
(72) Inventeur: Boucheron, Jean-Louis, F-77176 Savigny le Temple (FR); Blin, Benoit, F-75020 Paris (FR)
(74) Mandataire: Gamonal, Didier

(57) **Abrégé**

La présente invention concerne un capteur de niveau de liquide dans une cuve, notamment une cuve de lave-glace pour véhicule automobile, du type comprenant au moins trois électrodes plongeant dans ladite cuve, la première et la deuxième électrodes ayant une première longueur et la troisième électrode ayant une deuxième longueur, plus courte que ladite première longueur. Selon l'invention, la première électrode (407) est reliée à une premier fil (412) à travers une résistance rapportée (Rx) et est recouverte sur sa partie supérieure par une substance électriquement isolante (410), cette partie ayant une troisième longueur inférieure à ladite première longueur mais supérieure à ladite deuxième longueur, la deuxième électrode est reliée à un second fil (413), et la troisième électrode (409) est reliée au premier fil (412) en aval de la résistance (Rx) par rapport à la première électrode (407).

L'invention concerne également un module de commande de lave-glace comprenant un tel capteur de niveau.

## Description

La présente invention concerne un capteur de niveau de liquide ainsi qu'un module de commande de pompe de lave-glace l'incorporant, notamment pour véhicule automobile.

De tels lave-glaces sont généralement utilisés pour le nettoyage du pare-brise avant ou de la lunette arrière, ainsi que pour celui de la glace des projecteurs du véhicule.

Ils comportent généralement une pompe électrique qui est actionnée par l'utilisateur et qui projette sur la glace un liquide de nettoyage contenu dans un réservoir ou cuve de lave-glace.

Il est connu d'utiliser un capteur du niveau de liquide restant dans la cuve afin d'avertir l'utilisateur, par exemple à l'aide d'un voyant lumineux sur le tableau de bord ou d'un signal sonore, lorsque le niveau de liquide devient inférieur à un seuil déterminé et qu'il doit en être ajouté.

Un tel capteur de niveau est par exemple décrit dans le document EP 0 448 487. Il s'agit d'un capteur comportant deux électrodes conductrices parallèles entre elles, qui sont plongées de façon permanente dans la cuve pour constituer un capteur de continuité, les deux électrodes étant reliées par l'intermédiaire de deux lignes électriques à un module de commande de lave-glaces.

Un tel capteur est toutefois limitatif en ce qu'il ne présente qu'un unique seuil de détection.

Or, afin d'empêcher que la pompe ne soit endommagée ou à tout le moins désamorcée par le fait qu'elle soit actionnée alors que le niveau de liquide dans la cuve est inférieur au niveau de l'extrémité du conduit d'aspiration plongeant dans la cuve, il est nécessaire d'utiliser un capteur de niveau qui présente deux seuils de détection.

L'un des seuils est utilisé pour commander l'émission du signal sonore ou lumineux indiquant qu'il doit être ajouté du liquide, et l'autre seuil, inférieur au précédant, est utilisé pour générer un signal de désactivation de la pompe électrique.

Un tel capteur est par exemple décrit dans le document US 4,952,914, conforme au préambule de la revendication 1.

En effet, ce document propose un capteur de niveau du liquide de nettoyage contenu dans une cuve qui comporte trois électrodes plongeant dans ladite cuve, la première et la deuxième électrodes ayant une première longueur et la troisième électrode ayant une deuxième longueur, inférieure à ladite première longueur.

Avec un capteur de ce type, le niveau inférieur des deux premières électrodes définit le premier seuil de détection, alors que le niveau inférieur de ladite troisième électrode définit le second seuil de détection. L'une des deux dites premières électrodes est reliée à la masse alors que les deux autres électrodes sont reliées respectivement à un premier oscillateur générant un signal d'alarme et à un second oscillateur générant un signal de désactivation de la pompe.

Un tel capteur, par rapport à celui décrit dans le document EP 0 448 487, présente effectivement un deuxième seuil de détection, l'existence de ce deuxième seuil provenant de l'ajout d'une électrode supplémentaire ainsi que de la duplication associée du circuit oscillateur.

Ceci implique également de relier le capteur au module de commande de la pompe de lave-glaces par l'intermédiaire d'une ligne ou fil électrique supplémentaire.

Or, pour des raisons de coût et d'encombrement, ainsi que pour des motifs liés à la réduction de la consommation électrique par pertes ohmiques et de limitations des rayonnements électromagnétiques parasites le long des lignes, il est de plus en plus nécessaire de réduire la longueur des faisceaux de câblage dans les véhicules automobiles, et, à fortiori, de ne pas l'augmenter malgré l'ajout de fonctionnalités supplémentaires.

L'invention vise à pallier l'inconvénient de l'état de la technique précité.

En effet, la présente invention concerne un capteur de niveau du type défini dans le préambule de la revendication 1, qui se caractérise en ce que la première électrode est reliée à un premier fil à travers une résistance rapportée et est recouverte sur sa partie supérieure par une substance électriquement isolante, cette partie ayant une troisième longueur inférieure à ladite première longueur mais supérieure à ladite deuxième longueur, en ce que la deuxième électrode est reliée à un second fil, et en ce que la troisième électrode est reliée au premier fil en aval de la résistance rapportée par rapport à la première électrode.

Ainsi, selon une caractéristique de l'invention, un capteur de ce type présente deux seuils de détection, correspondant à des seuils de variations de la résistance équivalente entre les deux fils.

Selon une autre caractéristique de l'invention, le premier seuil est déterminé par le passage de ladite résistance équivalente d'une valeur correspondant sensiblement à la résistance de l'air à une valeur sensiblement égale à la valeur de la résistance rapportée, et le second seuil est déterminé par le passage de ladite résistance équivalente d'une valeur sensiblement égale à la valeur de la résistance rapportée à une valeur correspondant sensiblement à la résistance du liquide contenu dans la cuve.

Selon une autre caractéristique de l'invention, la valeur de la résistance rapportée est nettement inférieure à la valeur de la résistance de l'air et nettement supérieure à la valeur de la résistance du liquide présent dans la cuve.

Par l'expression «nettement supérieure» ou l'expression «nettement inférieure» employées ci-dessus, il faut comprendre que les valeurs concernées se situent dans un rapport de l'ordre de dix.

Selon une autre caractéristique de l'invention, le premier fil est connecté à une entrée d'un module de commande d'une pompe de lave-glace et le second fil est connecté à la masse.

Selon une autre caractéristique de l'invention, les électrodes s'étendent à travers un capot de fermeture de la cuve réalisé d'une matière électriquement isolante, un manchon de substance isolante recouvrant la partie supérieure de la première électrode étant réalisé de matière avec ledit capot de fermeture.

Selon une autre caractéristique de l'invention, la résistance rapportée est noyée dans le capot de fermeture de la cuve.

Selon une autre caractéristique de l'invention, le capot de fermeture et la cuve sont réalisés de matière.

L'invention concerne aussi un module de commande d'un lave-glace pour véhicule automobile du type comprenant une pompe électrique reliée à un conduit d'aspiration plongeant dans une cuve contenant du liquide de nettoyage, du type comprenant des moyens pour activer la pompe et pour projeter du liquide sur une glace du véhicule, et du type comprenant un capteur de niveau du liquide restant dans la cuve tel que défini ci-dessus.

Ce module de commande se caractérise en ce qu'il comporte des moyens pour générer un signal d'alarme lorsque le niveau du liquide dans la cuve, partant d'une situation initiale où la cuve est remplie, diminue jusqu'à franchir le deuxième seuil, et des moyens pour désactiver la pompe lorsque le niveau du liquide dans la cuve diminue jusqu'à franchir le premier seuil.

Par le terme désactiver employé ci-dessus, il faut comprendre que l'utilisation de la pompe est rendue impossible dans le but de la protéger contre les mauvaises conditions de fonctionnement auxquelles elle est soumise.

Selon une caractéristique de l'invention, le signal d'alarme produit lorsque le niveau du liquide dans la cuve diminue jusqu'à franchir le deuxième seuil, est adapté pour allumer un voyant lumineux qui est placé sur le tableau de bord du véhicule en situation visible par le conducteur.

D'autres caractéristiques et avantages de la présente invention apparaîtront à la lecture de la description qui va suivre, en référence aux dessins annexés qui sont :
- à la figure 1 : un schéma d'un mode de réalisation d'un capteur de niveau selon l'invention ;
- à la figure 2 : une courbe représentant la résistance électrique du capteur de niveau de la figure 1 en fonction du niveau de liquide présent dans la cuve ;
- à la figure 3 : un schéma d'un mode de réalisation d'un module de commande selon l'invention, utilisant un capteur de niveau tel que représenté à la figure 1.

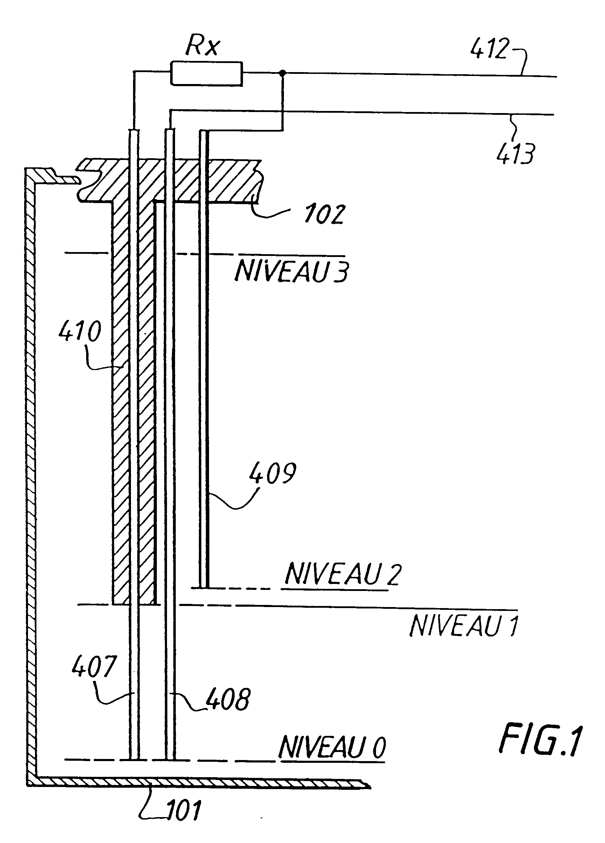

A la figure 1, on a représenté un mode de réalisation d'un capteur de niveau conforme à l'invention.

Ce capteur comporte trois électrodes conductrices 407, 408 et 409 sensiblement parallèles et plongeant sensiblement verticalement dans une cuve 101 comportant du liquide, par exemple du liquide de nettoyage pour vitres de véhicule automobile.

La cuve 101 est fermée par un capot 102 dont une petite partie seulement, à travers laquelle s'étendent les électrodes, est représentée à la figure 1.

La cuve 101, ainsi que son capot de fermeture 102, sont réalisés en matériau électriquement isolant, par exemple en matière plastique. Préférentiellement, la cuve 101 est réalisée de matière avec son capot de fermeture 102.

La première électrode 407 est reliée au premier fil 412 à travers d'une résistance rapportée Rx, la seconde électrode 408 est directement reliée au second fil 413, et la troisième électrode 409 est reliée au premier fil 412 en aval de la résistance Rx par rapport à la première électrode 407.

Les électrodes 407 et 408 sont de la même longueur, l'électrode 409 étant plus courte que les deux premières.

L'électrode 407 est recouverte sur sa partie supérieure d'une substance isolante 410. Avantageusement, le manchon isolant ainsi constitué autour de l'électrode 407 est réalisé de matière avec le capot 102 de la cuve 101 à travers lequel s'étendent les électrodes.

Préférentiellement, la résistance rapportée Rx est noyée par moulage ou par surmoulage dans le capot de fermeture de la cuve 101.

Afin de mettre en évidence les deux seuils selon le principe de l'invention, nous allons introduire la définition de quatre niveaux de liquide différents :
- un premier niveau, référencé "NIVEAU 0" à la figure 1, correspond au niveau défini par l'extrémité des électrodes 407 et 408 qui sont de même longueur ;
- un deuxième niveau, référence "NIVEAU 1" à la figure 1, à partir duquel l'électrode 407 est recouverte d'une substance isolante 410 ;
- un troisième niveau, référencé "NIVEAU 2" à la figure 1, correspond au niveau atteint par l'extrémité de l'électrode 409, ce NIVEAU 2 étant supérieur au NIVEAU 1 précité ;
- un quatrième niveau, référencé "NIVEAU 3" à la figure 1, situé au-dessus du NIVEAU 2 et correspondant approximativement au niveau maximum que peut atteindre le liquide dans la cuve 101 (c'est-à-dire lorsque la cuve est remplie).

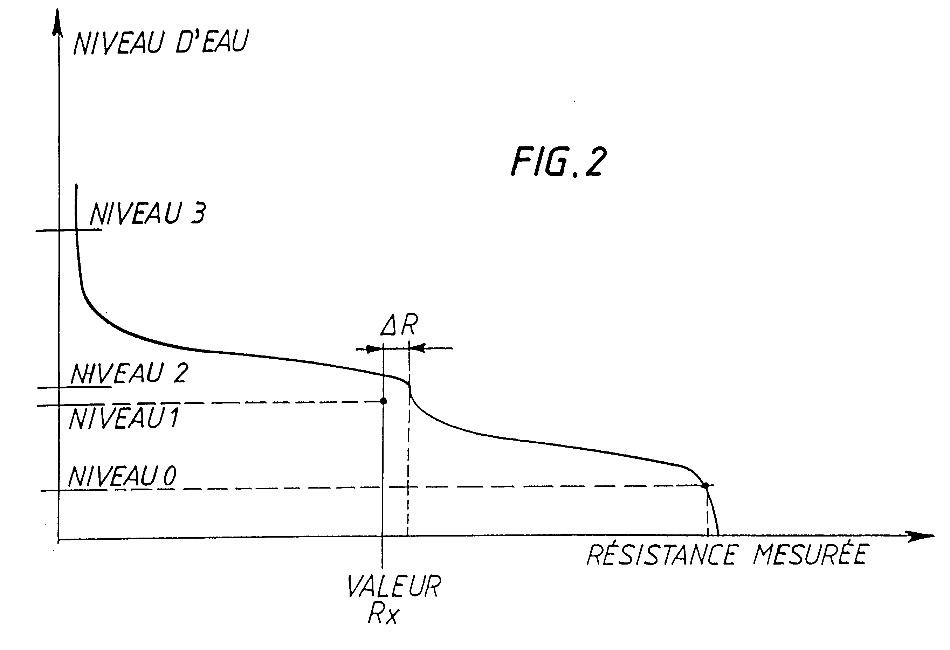

Afin d'illustrer le fonctionnement du capteur défini ci-dessus, nous allons maintenant nous reporter à la figure 2 sur laquelle l'axe des abscisses représente la résistance qui peut être mesurée entre les deux fils 412 et 413 et sur laquelle l'axe des ordonnées représente le niveau de liquide présent dans la cuve.

De plus, afin d'expliquer cette courbe, nous allons partir d'une situation où la cuve est initialement vide et où elle est remplie progressivement, le niveau de liquide présent dans la cuve étant initialement inférieur au NIVEAU 0 et devant atteindre le NIVEAU 3 qui est le niveau maximum admissible dans la cuve.

Lorsque la cuve est vide, la résistance équivalente entre les fils 412 et 413 est très importante car c'est la résistance de l'air. Cette résistance est de l'ordre de 1 MOhms (1 000 000 Ohms).

Lorsque le niveau d'eau augmente et dépasse le NIVEAU 0, les deux électrodes 407 et 408 sont mise en contact à travers le liquide et sont progressivement immergées. La valeur de la résistance équivalente entre les fils 412 et 413 est alors de l'ordre de la valeur de la résistance rapportée Rx.

En choisissant la valeur de la résistance Rx de telle sorte que cette valeur soit nettement inférieure à la valeur de la résistance de l'air, on voit que la courbe de la figure 2 présente un saut rapide autour de NIVEAU 0.

La valeur de la résistance équivalente entre les fils 412 et 413 reste toutefois supérieure à la valeur de Rx puisque Rx est insérée entre l'électrode 407 et le fil 412.

Lorsque le niveau d'eau présent dans la cuve atteint le NIVEAU 1, à partir duquel l'électrode 407 est entourée de la substance isolante 410, la valeur de la résistance équivalente entre les fils 412 et 413 est à peu près égale à la valeur de la résistance Rx.

A cette valeur s'ajoute en fait la valeur constante équivalente à la résistance du liquide entre les portions des électrodes 407 et 408 qui sont comprises entre le NIVEAU 0 et le NIVEAU 1, et qui sont alors complètement immergées. Sur la figure 2 cette valeur supplémentaire est représentée par l'écart ΔR.

Cette valeur de la résistance équivalente entre les fils 412 et 413 reste constante jusqu'à ce que le niveau de liquide présent dans la cuve atteigne le NIVEAU 2 à partir duquel l'électrode 409 est progressivement immergée.

En effet, à partir du NIVEAU 2, la résistance Rx est court-circuitée par le liquide présent dans la cuve.

En choisissant la valeur de la résistance rapportée Rx de telle sorte que cette valeur soit nettement supérieure à la valeur de la résistance du liquide, on voit que la résistance équivalente entre les fils 412 et 413 devient faible devant la valeur de Rx dès que l'électrode 409 est immergée.

La courbe de la figure 2 présente donc une décroissance rapide à partir de NIVEAU 2, et comporte donc un pallier correspondant à une valeur constante de la résistance équivalente entre le NIVEAU 1 et le NIVEAU 2.

Lorsque le niveau de liquide atteint le niveau maximum admissible, représente à la figure 2 par le NIVEAU 3, la résistance équivalente mesurée entre les fils 412 et 413 a atteint une valeur minimum sensiblement égale à la valeur de la résistance du liquide.

Sachant que le liquide sera de l'eau ou un dérivé aqueux dans la plupart des cas, et en approximant la résistance d'un tel liquide à 10 KOhms (10 000 Ohms), on choisit une résistance rapportée Rx dont la valeur sera de l'ordre de 100 KOhms (100 000 Ohms).

Ainsi, la résistance de l'air et la résistance Rx d'une part, ainsi que la résistance Rx et la résistance du liquide d'autre part, ont des valeurs se situant approximativement dans un rapport de l'ordre de dix.

Ainsi qu'on l'aura compris, le principe du capteur de niveau de liquide selon l'invention consiste à détecter les variations brutales de la résistance équivalente entre les deux fils 412 et 413.

Plus particulièrement, il consiste, pour le premier seuil, à détecter le passage de ladite résistance équivalente d'une valeur correspondant sensiblement à la résistance de l'air à une valeur sensiblement égale à la valeur de la résistance rapportée Rx, et, pour le second seuil, à détecter le passage de ladite résistance équivalente d'une valeur sensiblement égale à la valeur de la résistance rapportée Rx à une valeur correspondant sensiblement à la résistance du liquide contenu dans la cuve 101.

Avantageusement, ces variations sont suffisamment nettes pour être exploitées par un circuit électronique relativement simple avec de bonnes performances vis à vis des écarts possible entre la résistance des différents liquides qui peuvent être utilisés et vis-à-vis de l'usure des électrodes.

Le capteur de niveau de la figure 1 est destiné à être utilisé dans un module de commande de lave-glace comportant un dispositif de détection des deux seuils mis en évidence ci-dessus.

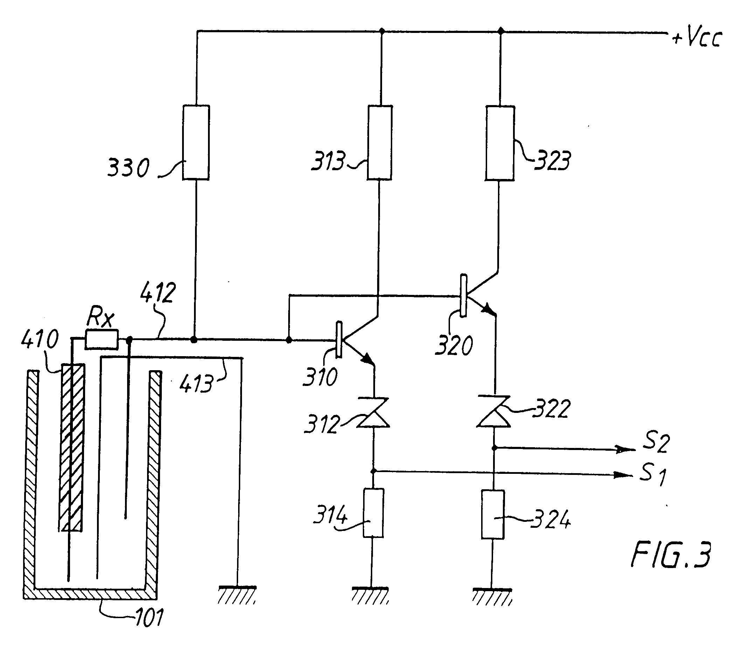

Un tel dispositif de détection de seuils est par exemple représenté à la figure 3 sur laquelle le fil 413 est connecté à la masse et le fil 412 est connecté à la base de deux transistors 310 et 320. Ces deux transistors 310 et 320 sont au centre de deux dispositifs de détection de seuil connectés en parallèle et permettant de détecter deux seuils différents. Pour chacun, une résistance 313, respectivement 323, est connectée entre le collecteur et la tension d'alimentation positive +Vcc, et une diode Zener 312, respectivement 322, est connectée en série avec une résistance 314, respectivement 324, entre l'émetteur et la masse.

Un point de sortie correspondant au point situé entre la diode Zener 312, respectivement 322, et la résistance d'émetteur 314, respectivement 324, délivre un signal de sortie S1, respectivement S2, représentatif de l'information de passage du niveau du liquide par le seuil correspondant.

Les valeurs des composants, notamment la tension seuil de la diode Zener 312 et celle de la diode Zener 322, qui sont différentes, définissent les deux seuils de détection et sont choisies pour permettre la détection du passage du niveau de liquide correspondant respectivement par le NIVEAU 2 (ou le NIVEAU 1) et par le NIVEAU 0.

Une résistance 330 connectée, d'une part, entre les bases communes des transistors 310 et 320 et, d'autre part, à la tension d'alimentation positive du circuit +Vcc, complète le pont de polarisation d'entrée de ces transistors.

Ainsi qu'on l'aura compris, le circuit ci-dessus est adapté pour faire conduire les transistors 310 et 320 lorsque le niveau de liquide décroît jusqu'à franchir respectivement le second seuil NIVEAU 2 et le premier seuil NIVEAU 0, la résistance équivalente présente entre les fils 412 et 413 étant la résistance aux bornes de laquelle on retrouve la tension de base desdits transistors.

Les signaux de sortie S1 et S2 sont adaptés pour respectivement commander l'allumage d'un voyant et pour inhiber le fonctionnement de la pompe de lave-glace non représentés, selon un mode de réalisation quelconque, à la portée de l'homme du métier.

La présente invention a été décrite selon un mode de réalisation préféré mais non limitatif, et dans son application non restrictive à un module de commande de lave-glaces pour véhicule automobile. En effet, le capteur selon l'invention peut être utilisé dans toute application pour laquelle un capteur de niveau de liquide est requis.

## Revendications

1. Capteur de niveau de liquide contenu dans une cuve, notamment une cuve de lave-glace pour véhicule automobile, du type comprenant au moins trois électrodes sensiblement parallèles et plongeant sensiblement verticalement dans ladite cuve, la première et la deuxième électrodes ayant une première longueur et la troisième électrode ayant une deuxième longueur, inférieure à ladite première longueur, caractérisé :
en ce que la première électrode (407) est reliée à un premier fil (412) à travers une résistance rapportée (Rx) et est recouverte sur sa partie supérieure par une substance électriquement isolante (410), cette partie ayant une troisième longueur inférieure à ladite première longueur mais supérieure à ladite deuxième longueur,
en ce que la deuxième électrode est reliée à un second fil (413) ,
et en ce que la troisième électrode (409) est reliée au premier fil (412) en aval de la résistance rapportée (Rx) par rapport à la première électrode (407).

2. Capteur de niveau selon la revendication 1, caractérisé en ce qu'il présente deux seuils de détection, correspondant à des seuils de variations de la résistance équivalente entre les deux fils (412,413).

3. Capteur de niveau selon la revendication 2, caractérisé en ce que le premier seuil (NIVEAU 0) est déterminé par le passage de ladite résistance équivalente d'une valeur correspondant sensiblement à la résistance de l'air à une valeur sensiblement égale à la valeur de la résistance rapportée (Rx), et en ce que le second seuil (NIVEAU 1, NIVEAU 2) est déterminé par le passage de ladite résistance équivalente d'une valeur sensiblement égale à la valeur de la résistance rapportée (Rx) à une valeur correspondant sensiblement à la résistance du liquide contenu dans la cuve (101).

4. Capteur de niveau selon l'une des revendications précédentes, caractérisé en ce que la valeur de la résistance rapportée (Rx) est nettement inférieure à la valeur de la résistance de l'air et nettement supérieure à la valeur de la résistance du liquide présent dans la cuve (101).

5. Capteur de niveau selon l'une des revendications précédentes, caractérisé en ce que le premier fil (412) est connecté à une entrée d'un module de commande d'une pompe de lave-glace et en ce que le second fil (413) est connecté à la masse.

6. Capteur de niveau selon l'une des revendications précédentes, caractérisé en ce que les électrodes (407,408,409) s'étendent à travers un capot de fermeture (102) de la cuve (101) réalisé d'une matière électriquement isolante, un manchon de substance isolante recouvrant la partie supérieure de la première électrode (407) étant réalisé de matière avec ledit capot de fermeture (102).

7. Capteur de niveau selon la revendication 6, caractérisé en ce que la résistance rapportée (Rx) est noyée dans le capot de fermeture (102) de la cuve (101).

8. Capteur de niveau selon la revendication 6, caractérisé en ce que le capot de fermeture (102) et la cuve (101) sont réalisés de matière.

9. Module de commande d'un lave-glace pour véhicule automobile du type comprenant une pompe électrique reliée à un conduit d'aspiration plongeant dans une cuve (101) contenant du liquide de nettoyage, du type comprenant des moyens pour activer la pompe et pour projeter du liquide sur une glace du véhicule, et du type comprenant un capteur de niveau du liquide restant dans la cuve selon l'une des revendications précédentes, caractérisé en ce qu'il comporte des moyens pour générer un signal d'alarme lorsque le niveau du liquide dans la cuve, partant d'une situation initiale où la cuve est remplie, diminue jusqu'à franchir le deuxième seuil (NIVEAU 1, NIVEAU 2), et des moyens pour désactiver la pompe lorsque le niveau du liquide dans la cuve diminue jusqu'à franchir le premier seuil (NIVEAU 0).

10. Module de commande selon la revendication 7, caractérisé en ce que le signal d'alarme produit lorsque le niveau du liquide dans la cuve diminue jusqu'à franchir le deuxième seuil (NIVEAU 2), est adapté pour allumer un voyant lumineux qui est placé sur le tableau de bord du véhicule en situation visible par le conducteur.
